**Europäisches Patentamt**

**European Patent Office**

**Office européen des brevets**

(19)

(11) Veröffentlichungsnummer: **0 060 396**
A2

(12)

# EUROPÄISCHE PATENTANMELDUNG

(21) Anmeldenummer: **82101093.1**

(22) Anmeldetag: **15.02.82**

(51) Int. Cl.³: **G 11 B 15/68**, G 11 B 23/02,
G 11 B 15/66

(30) Priorität: **18.03.81 DE 3110480**
**19.06.81 DE 3124270**

(43) Veröffentlichungstag der Anmeldung: **22.09.82**
**Patentblatt 82/38**

(84) Benannte Vertragsstaaten: **FR GB IT**

(71) Anmelder: **Blaupunkt-Werke GmbH,**
**Robert-Bosch-Strasse 200, D-3200 Hildesheim (DE)**

(72) Erfinder: **Timm, Horst, Ing. grad., Ulmenweg 31,**
**D-3200 Hildesheim (DE)**
Erfinder: **Hapke, Walter, Orleansstrasse 75e,**
**D-3200 Hildesheim (DE)**

(74) Vertreter: **Eilers, Norbert, Dipl.-Phys., Blaupunkt-Werke**
**GmbH Robert-Bosch-Strasse 200, D-3200 Hildesheim**
**(DE)**

(54) **Kleinkassettengerät.**

(57) Eine Wechselvorrichtung eines Kleinkassettengerätes besitzt eine Drehbühne für beispielsweise vier gleichsinnig um eine zentrale Drehachse herum angeordnete Kleinkassetten, von welchen sich bei gleichmäßig aufeinanderfolgenden Drehschritten jeweils eine in einer dem Laufwerk des Gerätes zugeordneten Betriebsposition befindet.

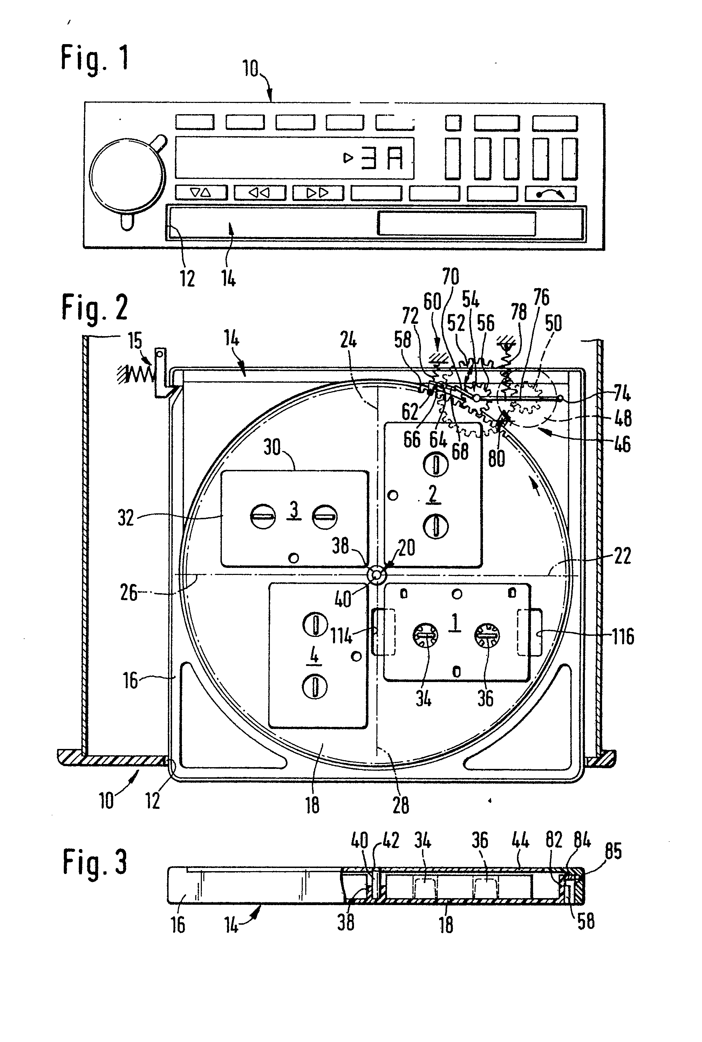

Die Wechselvorrichtung kann als auswechselbares Magazin mit einem von außen antreibbaren Drehteller ausgeführt (Fig. 2) oder in das Gerät eingebaut sein (Fig. 3). Bei der eingebauten Ausführung der Wechselvorrichtung kann jeweils während des Abspielens einer Kassette eine andere Kassette ausgewechselt werden.

0060396

Blaupunkt-Werke GmbH
Robert-Bosch-Str. 200

3200 Hildesheim

---

Kleinkassettengerät

---

Die Erfindung bezieht sich auf ein Kleinkassettengerät gemäß Oberbegriff des Anspruches 1.

Nachdem auch als Mikro- oder Minikassetten bekannte Kleinkassetten zunächst hauptsächlich für Diktiergeräte eingesetzt worden sind, gibt es inzwischen auch besonders handliche Kleinstkassettengeräte in HiFi-Stereo-Qualität.

Da mit Kleinstkassetten die gleiche Spieldauer wie mit bisher üblichen CC- oder Kompaktkassetten erreicht werden kann, sind solche Geräte wegen des geringen Raumbedarfs der entsprechend den Kassettenabmessungen kleinen und kompakten Laufwerke auch für den Einbau in Kraftfahrzeuge, insbesondere für einen in ein Autoradio integrierten Einbau interessant.

- 2 -

Die Erfindung bezweckt die Schaffung eines einfachen, im
Hinblick auf die wegen des beschränkten Einbauraumes im
Auto begrenzten Gehäuseabmessungen von Autoradios kompakt
aufgebauten Kleinkassengerätes, mit welchem ohne manuellen Kassettenwechsel, und ohne einzelne Kassetten beim Umschalten der Bandlaufrichtung zu wenden, eine Anzahl von
Mikrokassetten in wählbarer Reihenfolge abgespielt und
somit eine gegenüber Einzelkassetten erhöhte Spieldauer
erreicht werden kann. Ferner bezweckt die Erfindung mit geringem technischen und finanziellen Aufwand eine weitgehende Automatisierung des Wählvorganges und einen einfachen Kassettenwechsel. Schließlich bezweckt die Erfindung die Schaffung eines Gerätes, bei welchem ein Kassettenwechsel während des Abspielens einer anderen Kassette ausführbar ist.

Dies wird erfindungsgemäß im wesentlichen dadurch erreicht,
daß ein Kassettengerät mit den Merkmalen des Anspruches 1
ausgeführt wird. Ausgestaltungen und Weiterbildungen der
Erfindung sind in den Unteransprüchen angegeben.

Eine Vervielfachung der Spieldauer ohne manuellen Kassettenwechsel wird nach dem Hauptmerkmal der Erfindung mit Hilfe
einer Wechselvorrichtung erreicht, bei welcher eine Anzahl
von vorzugsweise vier Kleinkassetten auf einer Drehbühne
um deren Drehachse herum angeordnet sind, wobei in bestimmten, vorzugsweise arretierbaren Drehlagen der Drehbühne jeweils eine Kassette abgespielt werden kann.

Die Zusammenfassung mehrerer Mikrokassetten in einem herausnehmbar eingeschobenen Wechselmagazin bei der gemäß
Anspruch 2 ausgeführten Erfindung vereinfacht vor allem
im Auto die Bedienung eines derart ausgerüsteten Gerätes,
weil die wegen der kleinen Abmessungen nicht ganz einfache
Handhabung einzelner Kassetten entfällt. Außerdem ist die
Aufbewahrung eines mit mehreren Kassetten bestückten Magazins einfacher und problemloser als die Aufbewahrung einzelner Mikrokassetten.

Außerdem gestattet die Erfindung eine vorteilhaft einfache
Anordnung von Wickelsicherungen zur Vermeidung einer Bandschlaufenbildung der in das Tellermagazin eingesetzten
Kleinkassetten.

Bei einer erfindungsgemäß nach Anspruch 19 ausgeführten und
in das Gerät eingebauten Wechselvorrichtung kann während des
Abspielens jeweils einer Kassette in einer der bestimmten,
vorzugsweise arretierbaren Drehlagen der Drehbühne ggf.
gleichzeitig eine andere Kassette ausgewechselt werden.

Die erfindungsgemäße Wechselvorrichtung mit den in einer
gemeinsamen Ebene auf der Drehbühne liegenden Einzelkassetten zeichnet sich ferner durch einen besonders flachen
Aufbau mit geringem Flächen- und Raumbedarf aus.

Bei einer bevorzugten Ausgestaltung der Erfindung können
die vorteilhaft mit einer Drehbühnen-Arretierung gekoppelten Antriebsmittel für die Drehbewegung gleichzeitig Bestandteil einer Ein- und Ausschubautomatik für einen Kassettenwechsel bilden.

Weitere Vorzüge und Merkmale der Erfindung ergeben sich
aus der nachfolgenden Beschreibung und der Zeichnung schematisch vereinfacht dargestellter Ausführungsbeispiele der
Erfindung. Es zeigen:

Fig. 1     eine stirnseitige Ansicht und eine zum Teil wegge-
und  2     brochene und geschnittene Draufsicht eines kombi-
           nierten Autoradio-Kassettengerätes mit einem er-
           findungsgemäßen Tellermagazin,

Fig. 3     eine mit Bezug auf Fig. 1 stirnseitige, zum Teil

0060396

geschnittene Ansicht der in Fig. 2 gezeigten Ausführung eines erfindungsgemäßen Tellermagazins,

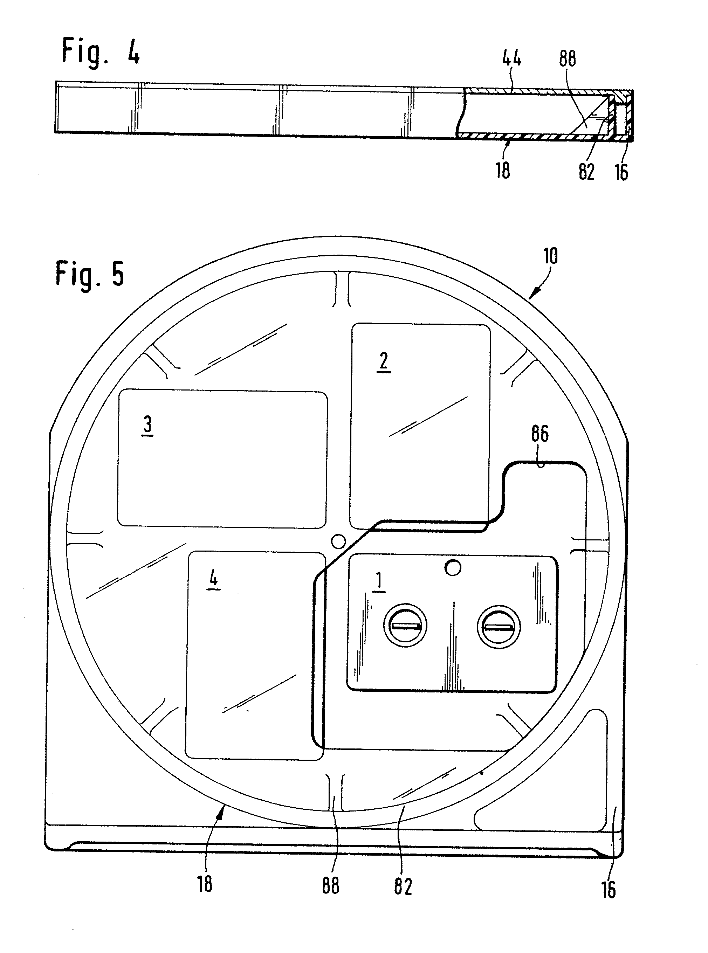

Fig. 4       weiter vereinfachte, der Fig. 3 bzw. 2 entspre-
und  5       chende Ansichten einer abgewandelten Ausführungs-
             form eines erfindungsgemäßen Tellermagazins,

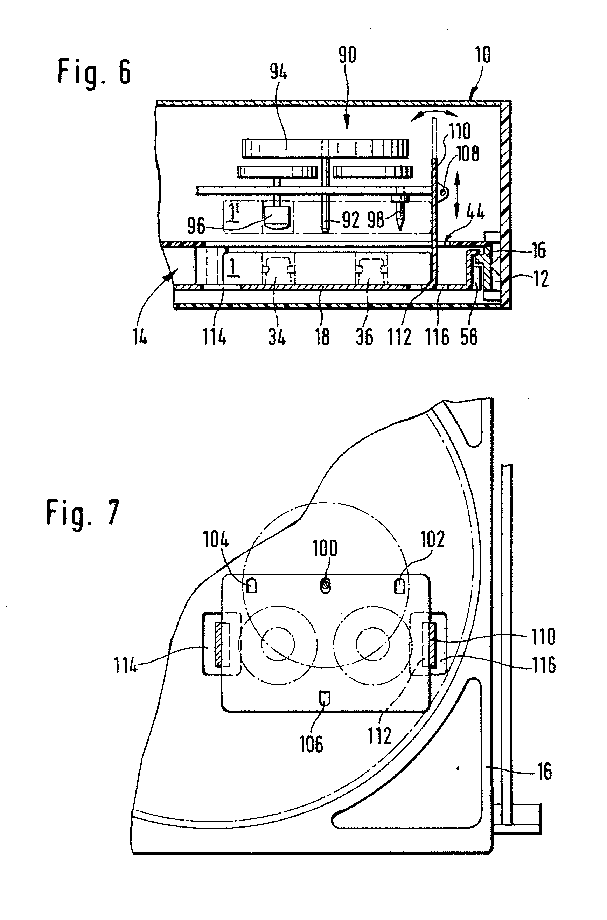

Fig. 6       herausgebrochene und geschnittene stirnseitige und
und  7       von oben gesehene Teilansichten eines mit einem
             erfindungsgemäßen Wechselmagazin ausgerüsteten Ge-
             rätes zur Veranschaulichung der Anordnung und Funk-
             tion einer Wickelsperre und der Zuordnung des Ma-
             gazins zu einem Kassettenlaufwerk,

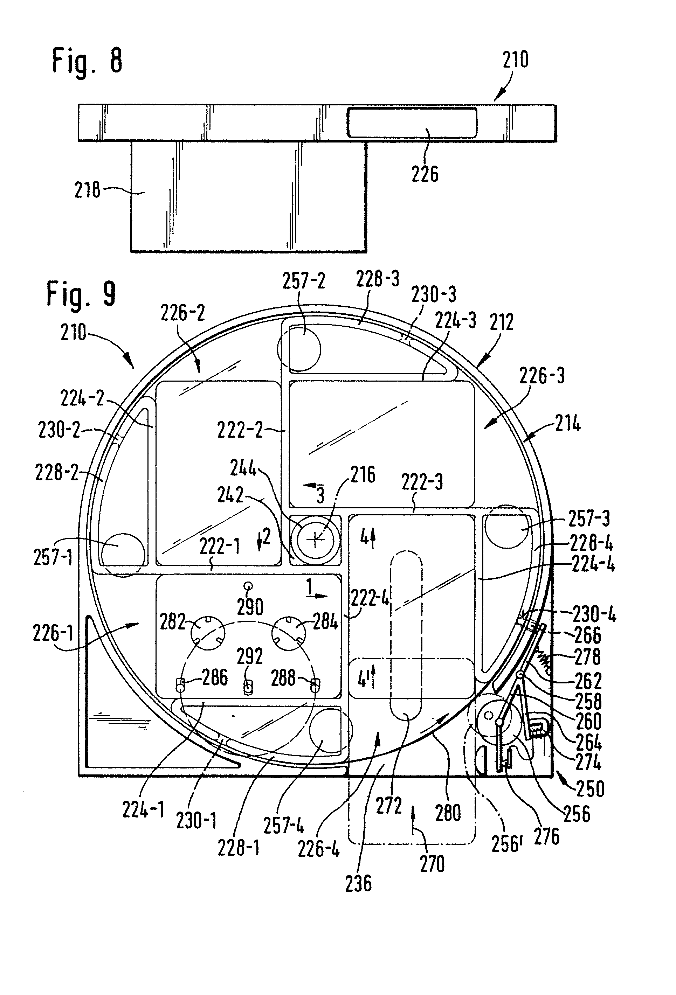

Fig. 8       eine Seiten- bzw. Vorderansicht,

Fig. 9       eine durch schematisch angedeutete Antriebsteile
             ergänzte Aufsicht einer weiteren Ausführungsform
             der erfindungsgemäßen Wechselvorrichtung und

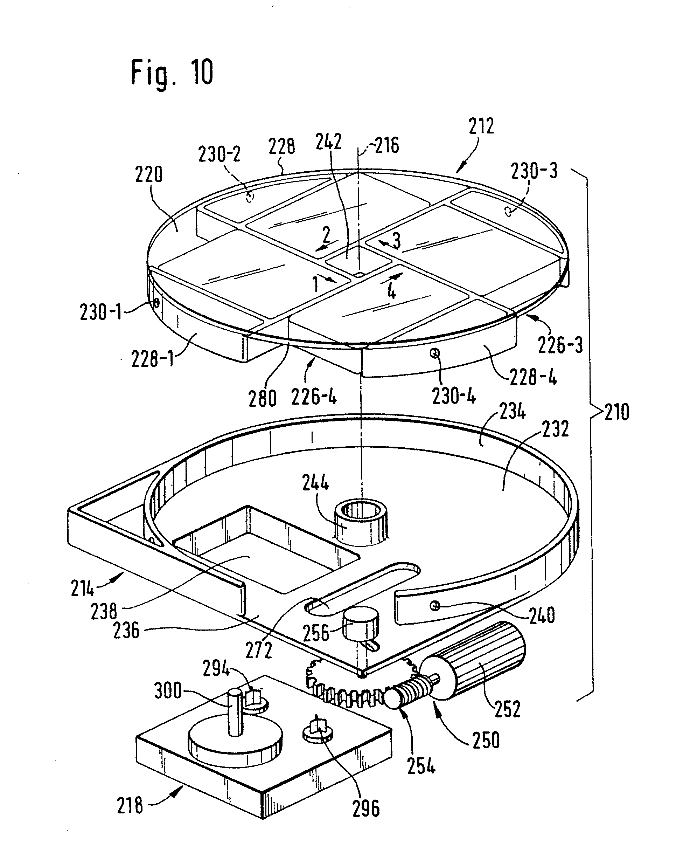

Fig.10       eine auseinandergezogene schaubildliche Darstellung
             der wesentlichen Bestandteile einer solchen Wech-
             selvorrichtung.

Ein in Fig. 1 gezeigtes kombiniertes Autoradio-Kleinkassettengerät 10 besitzt einen durch eine Öffnung in der Gerätestirnseite zugänglichen Magazinschacht 12, in welchen ein
mit vorzugsweise vier Kleinkassetten bestücktes Wechselmagazin 14, siehe Fig. 2 und 3, eingeschoben und mittels eines
beispielsweise durch über Hub lösbaren, bei 15 angedeuteten
Rastmechanismus an sich bekannter Bauart verriegelt werden
kann.

Das Wechselmagazin 14 besitzt ein rahmenartiges Gehäuse 12
für einen darin drehbaren, im wesentlichen aus einer Kreisscheibe bestehenden Drehteller 18, auf welchem die Kleinkassetten 1 bis 4 gemäß Fig. 2 nach Art von Windmühlenflügeln in einer rechtwinklig gekreuzten Anordnung gleichsinnig um den Drehpunkt 20 des Tellers 18 herum mit gleichmäßigen Abständen zueinander verteilt sind.

Die Tellerscheibe 18 läßt sich durch vier zueinander senkrechte, durch Hilfslinien 22 bis 28 angedeutete Halbmesser
in vier gleiche Sektoren aufteilen, wobei in jedem Sektor
eine Kassette mit einer längeren und einer kürzeren Schmalseite 30 bzw. 32 mit geringem Abstand jeweils parallel zu
in Umfangsrichtung aufeinander folgenden Begrenzungshilfslinien des jeweiligen Sektors angeordnet sind. Jede Kassette
in einem Sektor liegt also mit einer längeren Schmalseite
einer kürzeren Schmalseite einer Kassette im benachbarten
Sektor mit gleichem Abstand, dessen Bedeutung noch erläutert wird, parallel gegenüber.

Bei dem gezeigten Beispiel weist jeweils die Stirnseite der
Kassette eines Sektors zu einer Schmalseite der Kassette des
benachbarten Sektors. Die Anordnung kann je nach Anordnung
des Laufwerks auch so gewählt sein, daß sich in benachbarten
Sektoren jeweils eine Kassettenrückseite und eine Kassetten-
schmalseite gegenüberliegen.

In den einzelnen Sektoren übereinstimmend angeordnete, von
der Tellerscheibe 18 aufragende Zungen bzw. Laschen 34 und
36, die in die Innenritzel der Bandspulen einer in das Magazin eingesetzten Kassette eintauchen, schließen als Wickelsicherungen die Bildung von Bandschlaufen in der Kassette aus
und dienen gleichzeitig zur Festlegung und Fixierung der
Einbaulage der in das Magazin eingesetzten Kassetten. Ggf.
kann die Tellerscheibe ggf. zusätzlich vertiefte Mulden beispielsweise etwa der halben Kassettenhöhe aufweisen.

Der Teller 18 hat an seinem Drehpunkt 20 eine Lagerstelle, beispielsweise in Form eines in eine am Tellerboden angeformte, nach oben vorstehende Buchse 38 eingesetzten Lagerzapfens 40, siehe auch Fig. 3, dessen frei nach oben vorstehendes Ende in ein zentrales Lagerloch 42 einer oberen
Abdeckung des Magazingehäuses 44 eintaucht und bündig mit
der Oberfläche der Abdeckung 44 abschließt.

In Fig. 2 schematisch angedeutete, geräteseitige Antriebsmittel 46 dienen zum Antrieb des Tellers 18 für die Wechselbewegung der Kassetten 1 bis 4 in dem in den Magazinschacht 12 eingeschobenen und verriegelten Magazin 14.

Die Antriebsmittel 46 bestehen im wesentlichen aus einem
Motor 48 sowie einer beispielsweise mit Zahnrädern 50, 52
aufgebauten Getriebeuntersetzung für eine mit dem Rand des
Tellers 18 zusammenwirkende Antriebsrolle 54, die durch
eine im Gehäuserahmen 16 vorhandene Eintrittsöffnung beim
Einschieben der Kassette automatisch in Antriebsberührung
mit dem Rand des Drehtellers 18 kommt.

Der Antrieb kann wahlweise als Reibantrieb oder, wie durch
die Zahnung 56 und 58 der Antriebsrolle 54 bzw. des Randes
des Drehtellers 18 angedeutet ist, als Zahnantrieb ausgebildet sein.

In dem Magazin 14 ist eine nach Art einer Rastklinke arbeitende Tellerverriegelung 60 von Vorteil, durch welche der
Teller 18 bei herausgenommenem Magazin automatisch gegen
unbeabsichtigte Drehung gesichert ist. Die Tellersperre 60
besteht beispielsweise aus einer mit der Zahnung 58 des
Tellerrandes zusammenwirkenden Rastnase 62, die auf einem
bei 64 im Magazingehäuse schwenkbar gelagerten, zweiarmigen
Hebel 66, 68 sitzt. Bei Erreichen der im Magazinschacht
verriegelten Endlage des Magazins 14 trifft der Arm 68 des die Rastnase 62 tragenden Hebels auf einen gerätefesten Anschlag 70, so daß die Teller-Arretierung gegen die Vorspannkraft einer auf die Rastnase wirkenden Feder 72 aufgehoben wird.

Bei der gezeigten Ausführungsform sitzt der gehäusefeste Anschlag 70 auf einem bei 74 in dem Gerät 10 schwenkfähig gelagerten Arm 76, dessen freies Ende die drehbar gelagerte
Antriebsrolle 54 trägt. Bei leerem Magazin liegt der Hebel
76 unter der Vorspannkraft einer am Gehäuse abgestützten
Feder 78 an einem gehäusefesten Anschlag 80, von dem er
beim Ankoppeln an den Teller 18 eines eingeschobenen Magazins 14 abgehoben wird. Diese Anordnung ist vor allem dann
vorteilhaft, wenn der Motor 48 gleichzeitig für den Tellerantrieb und den Laufwerkantrieb verwendet wird. Die für die
Tellerdrehung am Rand des Tellers 18 anliegende Antriebsrolle 54 wird dann für die Aufnahme des Kassettenbetriebes
beispielsweise mit einerelektromagnetischen Steuerung vom
Tellerrand abgehoben, so daß die Rastvorrichtung 60 einfällt und den Teller 18 während des Kassettenbetriebes verriegelt hält.

Gemäß Fig. 3 kann der Teller 18 in weiterer Ausgestaltung
der Erfindung mit einem hochgezogenen Rand 82 ausgebildet
sein und somit die Form eines flachen Topfes haben. Der
Außenmantel des hochgezogenen Tellerrandes trägt dann eine
Aufrauhung oder einen Reibbelag bzw. die Verzahnung 58 für
den Tellerantrieb 46, der durch eine Öffnung des Magazinrahmens in das in den Geräteschacht 12 eingeschobene Magazin  14 eintaucht.

Ein radial vorspringender, äußerer Ringflansch 84 an der
Oberkante des hochgezogenen Tellerrandes 82 ist in einer
zumindest an der Eintrittsöffnung für den Antrieb 46 unterbrochenen Ringnut 85 der den Teller 18 umfassenden Innenwandfläche des Gehäuserahmens 16 geführt.

Diese Führung sorgt in Verbindung mit dem mittleren Lagerpunkt 20 für eine einwandfreie Drehung des Tellers 18 beim
Kassettentransport.

Fig. 4 und 5 zeigen stärker vereinfacht eine gegenüber Fig.
2 und 3 geringfügig abgewandelte Magazinausführung, dessen
Gehäuserahmen hier nicht rechteckig, sondern im hinteren
Teil abgerundet ist.

Trotz dieser geringfügigen Abweichung sind in Fig. 4 und 5
für gleiche oder übereinstimmende Teile die gleichen Bezugszeichen wie in Fig. 2 und 3 verwendet.

Fig. 5 zeigt noch eine in Fig. 1 aus Gründen der Übersichtlichkeit weggelassene Öffnung 86 in der mit dem Rahmen 16
des Magazingehäuses verbundenen oberen Magazinabdeckung 44.
Diese Öffnung, der im Magazinschacht die Antriebsplatine
des Laufwerks gegenüberliegt, dient auch zum Entnehmen und
Einsetzen der Kassetten beim Bestücken des Magazins 10.
Ggf. kann diese Öffnung für die Aufbewahrung des Magazins
durch einen Schiebedeckel oder Jalousie verschlossen werden.
Fig. 5 zeigt auch einige keilförmige, radial nach innen
weisende Verstärkungsrippen des Tellers 18, die vorzugsweise mit gleichen Abständen am Umfang verteilt sein können
und den hochgezogenen Tellerrand 88 stabilisieren.

Fig. 6 und 7 zeigen noch schematisch vereinfacht die Anordnung eines Kassetten-Laufwerkes 90, welches bei den erläuterten Ausführungsbeispielen oberhalb des Magazinschachtes
12 bzw. der Öffnung 86 in der oberen Abdeckung 44 eines in
den Magazinschacht eingeschobenen Magazins 14 angeordnet
ist.

Vom Laufwerk 90 sind lediglich die für Mikrokassetten mittig
angeordnete Tonwelle 92 mit Schwungmasse 94 des Tonwellenantriebes, einer der Antriebszapfen 96 für schnellen Vor-
oder Rücklauf sowie einer der in Referenzlöcher einer aufgeschobenen Kassette eintauchenden Referenzstifte 98 angedeutet.

Eine Tonwellen-Durchgangsöffnung 100 sowie Referenzlöcher
102 bis 106 sind am Beispiel der Mikrokassette 1 in Fig. 7
angedeutet.

Ferner zeigen Fig. 6 und 7 einen von zwei auf gegenüberliegenden Kassettenseiten angeordneten, gemeinsam höhenverstellbaren Armen 110, die bei 108 schwenkfähig gelagert sind und
an ihren unteren Enden 112 rechtwinklig zur Kassette hin abgebogene Greiforgane besitzen.

Diese in einer ausgeschwenkten Stellung nach unten bewegten
Greifarme 110, 112 tauchen durch Bodenöffnungen 114, 116
des Tellers 18, ergreifen die Kassette und heben diese von
den Wickelsperren 34, 36 in ihre mit 1' gezeigte Betriebsposition auf dem Laufwerk 90. Anschließend werden für die
Aufnahme des Betriebes der für die gewählte Bandlaufrichtung
zuständige Tonkopf und die Andruckrolle an das Kassettenband
heranbewegt.

Für die vorstehend beschriebene Greifbewegung ist der oben
anhand der Fig. 2 erläuterte Abstand zwischen benachbarten
Kassetten auf dem Teller 18 des Magazins 14 vorhanden, der
auch genügend Raum für die zentrale Lagerung 20 des Tellers
18 läßt.

Die Steuerung des vorstehend erläuterten Kassettenliftes
kann z. B. vom Motor 48 für den Antrieb des Drehtellers 18
übernommen werden, da der Teller für das Abspielen einer
Kassette ohnehin arretiert wird.

Die schrittweise Drehung des Tellers 18 zwischen den einzelnen Abspielpositionen kann z. B. elektromechanisch, elektromagnetisch oder opto-elektrisch gesteuert werden.

Ferner kann ein erfindungsgemäß ausgerüstetes Gerät mit einer Suchautomatik für aufnahmebereite oder abzuspielende Kassetten ausgestattet werden. Ggf. kann beim Abspielen auch die Nummer, die Seite usw. z. B. auf dem Anzeigefeld eines Autoradios angezeigt werden.

Die am Beispiel eines kombinierten Autoradio-Kassettengerätes erläuterte Erfindung kann ebenso vorteilhaft beispielsweise auch in sogenannten Kassettendecks für Heimgeräte eingesetzt werden.

Bei einer besonders preisgünstigen Ausgestaltung des erfindungsgemäßen Magazins 14 besteht der Teller 18 mit den einteilig angeformten Wickelsperren 34, 36 ebenso wie der Magazinrahmen 16 aus Kunststoff, wobei für die Magazinabdeckung 44 vorzugsweise ein durchsichtiger Werkstoff, z.B. Acrylglas verwendet werden kann.

Das in Fig. 8 - 10 dargestellte Ausführungsbeispiel einer erfindungsgemäßen Wechselvorrichtung 210 besteht im wesentlichen aus einer Drehbühne 212, die in einem passenden Aufnahmeteil 214 um eine zentrale Achse 216 drehbar gelagert ist.

Der Aufnahmeteil 214 ist feststehend im Gehäuse eines ggf. in ein Autoradio integrierten Kassettengerätes gemäß Darstellung beispielsweise oberhalb eines Autoreverse-Laufwerkes 218 für Mikrokassetten angeordnet.

Je nach Geräteaufbau kann die Wechselvorrichtung auch in einer um 180° gedrehten Lage in dem Gerät eingebaut sein.

Die zur Vereinfachung der folgenden Erläuterungen verwendeten Begriffe "oben" und "unten" beziehen sich also nur auf
die gezeigte Darstellung, stellen aber keine Beschränkung
dar.

Die gezeigte Wechselvorrichtung 210 dient zur Aufnahme von
vier gleichsinnig um den Drehpunkt 216 der Drehbühne 212
herum geordneten Mikrokassetten 1 bis 4. Die Anordnung ist
so getroffen, daß jeweils eine lange und eine kurze Seite
benachbarter Kassetten eine Seite eines Quadrates bilden,
dessen Diagonale sich im Drehpunkt 216 der Bühne kreuzen.

Die Drehbühne 212 besteht im wesentlichen aus einer Kreisscheibe 220, die durch senkrecht von der Scheibenfläche vorspringende Trennwände 222 und 224 in nach unten offene Aufnahmekammern 226 unterteilt ist, welche gleichzeitig als
Einschubschächte für die einzelnen Kassetten dienen, die
durch Öffnungen am Umfang 228 der Drehbühne zugänglich sind.

Wie am deutlichsten aus Fig. 9 zu erkennen ist, sind die
jeweils mit einem Winkelabstand von 90° aufeinanderfolgenden, als Einschubschächte ausgebildeten Aufnahmekammern 226
bzw. deren parallele Begrenzungswände 222 und 224 für die
einzelnen Kassetten übereinstimmend angeordnet und deshalb
entsprechend der Anzahl der Kassetten mit 222-1 bis 222-4,
224-1 bis 224-4 und 226-1 bis 226-4 bezeichnet.

Zwischen den Einschuböffnungen der Kammern 226 sind jeweils zueinander senkrechte, in Umfangsrichtung der Drehbühne aufeinanderfolgende Trennwände durch zum Bühnendrehpunkt 216 konzentrische Abschnitte 228 einer durch die
Einschuböffnungen unterbrochenen, zum Bühnendrehpunkt 216
konzentrischen, zylindrischen Ringwand miteinander verbunden.
In jedem der gleichzeitig stabilisierend wirkenden Ringwandabschnitte 228-1 bis 228-4 ist in gleicher Weise eine der
in Umfangsrichtung mit gleichem Abstand voneinander angeordneten Durchgangsöffnungen 230-1 bis 230-4 für eine noch erläuterte Drehbühnen-Arretierung vorhanden.

Der als feststehender Chassisteil ausgebildete oder auf
einer feststehenden Chassisplatte des Gerätes angebrachte
Aufnahmeteil 214 für die passend einsetzbare Drehbühne 212
hat die Form eines nach oben offenen, flachen Topfes mit
einem zur Drehachse 216 konzentrischen Boden 232 und einer
an dessen Außenwand hochstehenden, zylindrischen Ringwand
234, die durch eine Einschuböffnung 36 unterbrochen ist,
mit welcher jeweils eine der Einschuböffnungen 226-1 bis
226-4 fluchtend ausgerichtet werden kann.

An der über dem Laufwerk 218 befindlichen Stelle ist im Boden 230 ein Fenster 238 ausgeschnitten, welches mit einem
nach unten führenden Schacht ausgestattet sein kann.

Eine Durchgangsöffnung 240 im Mantel 234, mit welcher jeweils eine der Ringwand-Öffnungen 230-1 bis 230-4 der Drehbühne 212 radial fluchtend ausgerichtet werden kann, ist
Teil der noch erläuterten Drehbühnen-Arretierung.

Jeweils parallele Trennwände 222 und 224 der Drehbühne 212
stoßen als innere und äußere Seitenbegrenzungen einer Aufnahmekammer 226 mit ihren hinteren Endkanten jeweils rechtwinklig auf die Trennwand 222 einer in Umfangsrichtung benachbarten Aufnahmekammer 226. Jede innere Seitenwand 222
einer Aufnahmekammer 226 bildet also gleichzeitig die
hintere Endwand einer benachbarten Aufnahmekammer.

Die mit jeweils gleichem Abstand tangential am Drehpunkt 216
vorbeiführenden Endabschnitte der inneren Trennwände 222
bilden eine den Drehpunkt umfassende, quadratische Mittelöffnung 242 der Drehbühne 212.

In diese nach unten offene oder durchgehende Öffnung 242
taucht beim Zusammenbau der Wechselvorrichtung ein vom
Boden 232 des Aufnahmeteiles 214 aufragender, beispielsweise als Buchse ausgebildeter Lagerzapfen 244 ein, dessen
Durchmesser und axiale Länge der Lageröffnung 242 angepaßt sind.

Bei dem gezeigten Ausführungsbeispiel sorgt die passend in
die Öffnung 242 eintauchende Lagerbuchse gemeinsam mit den
ebenfalls passend in die Umfangswand 234 des Aufnahmeteiles
214 eintauchenden Ringwandabschnitten 228 der Drehbühne
für eine einwandfrei geführte Drehbewegung, der im Aufnahmeteil 214 der zusammengebauten Wechselvorrichtung 210 gelagerten Drehbühne 212.

Die erläuterte, geometrische Anordnung der in einer gemeinsamen Umlaufebene auf einer minimalen Quadratfläche liegenden vier Mikrokassetten 1 bis 4 hat den Vorteil, daß der
durch den Boden 232 und die Ringwand 234 des Aufnahmeteiles
214 sowie die Kreisscheibe 220 der Drehbühne 212 umschlossene, durch die Trennwände 224 und 222 in einzelne Aufnahmekammern 226 unterteilte Einbauraum das für eine derartige
Wechselvorrichtung kleinstmögliche Volumen hat. Vor allem
für ein mit einer erfindungsgemäßen Wechselvorrichtung 210
ausgerüstetes, kombiniertes Autoradio-Kassettengerät hat
die hier gezeigte Anordnung auch den Vorteil, daß für die
Einschuböffnung 236 zu jeweils einer Kassetten-Aufnahmekammer 226 in der Gerätestirnseite nur eine minimale, etwa
der Fläche einer kürzeren Kassetten-Schmalseite entsprechende Fläche benötigt wird.

Ein vorteilhaft einfach mit einer Ein-Ausschubautomatik
kombinierter Drehbühnen-Antrieb 250, der beispielsweise als
Reibantrieb ausgebildet ist, kann beispielsweise gemäß Fig.
9 im Bereich der Einschuböffnung 236 des feststehenden Aufnahmeteiles 214 der Wechselvorrichtung 210 angeordnet sein.

Der Antrieb 250 besitzt beispielsweise eine von einem gemäß
Fig. 10 unterhalb des Aufnahmeteiles 214 der Wechselvorrichtung 210 angeordneten Motor 252 über eine Getriebeverbindung 254 antreibbare, griffige Reibrolle 256 mit einem
weichen Reibbelag aus Gummi oder dergleichen.

Die Antriebsrolle 256 ist mit den beispielsweise auf einer
gemeinsamen Trägerplatte angeordneten Antriebselementen
252, 254 um eine zur Drehachse 216 der Drehbühne 212 paralle Achse 258 schwenkbar, siehe Fig. 9.

Der grundsätzliche Aufbau einer Stellvorrichtung für die
gesteuerte Schwenkbewegung des Antriebes 250 um die Achse
258 ist in Fig. 9 schematisch angedeutet. Dabei veranschaulicht ein starrer, dreiarmiger Hebel, dessen Arme mit 260
bis 264 bezeichnet sind, die grundsätzliche Zuordnung der
Stell- und der Antriebselemente, die unter Beibehaltung
ihrer relativen Lage zueinander gemeinsam um die Achse 258
schwenkbar sind.

Die Andruckrolle 256 ist am freien Ende des Hebelarmes 260
gelagert, während das diametral gegenüberliegende freie
Ende 262 einen Arretierungsstift 266 trägt, der radial
durch die Bohrung 240 im Mantel 234 des Aufnahmeteiles 214
in eine damit je nach Drehstellung der Drehbühne 212 fluchtende Bohrung 230, hier die Bohrung 230-4, in einem der zylindrischen Ringwandabschnitte 228 der Drehbühne 212 eintaucht und diese gegen Drehung sichert, wenn die Einschuböffnung einer Kassetten-Aufnahmekammer 226, hier der Kammer
226-4, mit der Einschuböffnung 236 im Mantel 234 des Aufnahmeteiles 214 fluchtet, um einen Kassettenwechsel zu ermöglichen.

Für einen solchen Auswechselvorgang ragt die Antriebsrolle
256 gegenüber dem bis zur Öffnung 236 reichenden, äußeren Endabschnitt der Trennwand 222-4 in den Einschubschacht der
Kassetten-Aufnahmekammer 226-4 hinein, so daß eine in Richtung des Pfeiles 270 eingeführte Kassette 4, die mit 4' gestrichelt in einer Zwischenlage während des Einschubes angedeutet ist, durch Friktion zwischen Antriebsrolle und angrenzender Kassetten-Seitenwand in die durch die Trennwände
222-3, 222-4 und 224-4 begrenzte Kammer 226-4 bewegt wird.

Zur Ausführung des Kassettenausschubes wird die Drehrichtung der Antriebsrolle 256 durch Umschaltung des Motors 252
umgekehrt. Dabei können ebenfalls vom Antriebsmotor 252 gesteuerte Elemente durch einen Schlitz 272 im Boden des Aufnahmeteiles 214 der Wechselvorrichtung 210 mit der Kassette in der jeweils über dem Schlitz liegenden Aufnahmekammer 226 in Eingriff gebracht werden, um die Kassette in
den Transportbereich der Antriebsrolle 256 zu bringen, die
dann für das völlige Ausschieben der Kassette sorgt.

Auf der Scheibe 220 der Drehbühne 212 können jeweils im
Raum zwischen einer Aufnahmekammer 226 und einem äußeren
Ringwand-Abschnitt 228 frei drehbar gelagerte, in Fig. 9 gestrichelt angedeutete Rollen 257-1 bis 257-4 vorhanden sein,
deren Außenmantel jeweils durch Ausschnitte oder Unterbrechungen der vorderen Abschnitte der Trennwände 222 geringfügig vorsteht. In ihrer für die Rolle 257-4 gezeigten, der
Antriebsrolle 256 etwa gegenüberliegenden Position erleichtern diese Rollen durch Verringerung der Reibung beim Ein-
und Ausschub der Kassetten einen einwandfreien Kassettenwechsel.

Der gemäß Darstellung gegenüber dem Arm 260 abgewinkelte
Hebelarm 264 dient als Anker für einen Elektromagneten 274
zur Festlegung der für den Ein- bzw. Ausschub einer Kassette
eingenommenen Schwenklage der Antriebsrolle 256. Zur Steuerung des Elektromagneten 274 ist ein Schalter 276 vorhanden.

Nachdem eine Kassette, wie erläutert, in die jeweilige Aufnahmekammer 226 eingezogen worden ist, öffnet der Schalter 214 und der Magnet 274 fällt ab, so daß der Arretierstift 266 beispielsweise unter der Kraft einer zwischen dem Hebelarm 262 und einem gerätefesten Punkt liegenden Zugfeder 278 zur Lösung der Arretierung aus dem Rastloch 230-4 der Drehbühne herausgezogen wird.

Dabei wird gleichzeitig die auf dem Hebelarm 260 gelagerte Andruckrolle 256 in ihre mit 256' angedeutete Position geschwenkt, in der sie unter der Kraft der Feder 278 in Antriebsberührung mit dem geschlossen umlaufenden Außenrand 280 der Kreisscheibe 220 der Drehbühne 212 in Antriebsberührung ist. Die Drehbühne wird dann gemäß Fig.9 beispielsweise gegen den Uhrzeigersinn weitergedreht, bis die nächste Aufnahmekammer 226, hier die Kammer 226-1, die Lade- oder Auswechselposition erreicht, in welcher der Arretierstift 266 und die Andruckrolle 256 durch Schließen des Schalters 276 von dem Elektromagneten 274 wieder in die in Fig. 9 gezeigte Position geschwenkt werden.

Ggf. kann der Schalter 276 mit Hilfe einer elektronischen Suchautomatik gesteuert werden, die es gestattet, daß jeweils eine gewünschte Kassette in ihre Abspielposition und gleichzeitig eine andere in ihre Auswechselposition gebracht werden kann.

Bei dem gezeigten Ausführungsbeispiel befindet sich der über dem Kassetten-Laufwerk 218 angeordnete Fensterschacht 238 im Boden 232 des Aufnahmeteiles 214 neben der Einschuböffnung 236 der Wechselvorrichtung 210. Gemäß Fig.9 befindet sich also die Mikrokassette 1 über dem Laufwerk und kann mit einem Kassettenlift an sich bekannter Bauart aus der Kammer 226-1 entnommen und auf die Antriebselemente des Laufwerkes 218 aufgeschoben und nach dem Abspielen wieder in die Aufnahmekammer 226-1 zurückbewegt
werden.

Mikrokassetten, siehe die Kassette 1 in Fig. 9, haben jeweils achsparallele Bandspulenöffnungen 282, 284, vordere
und hintere Referenzlöcher 286 bis 290 sowie eine mittig
im Bereich der Kassettenstirnseite liegende Tonwellenöffnung 292.

Entsprechend besitzt das Autoreverse-Laufwerk 218, wie in
Fig. 10 angedeutet, neben zwei Antriebszapfen 294, 296
und nicht gezeigten Referenz-Stiften nur eine antreibbare
Tonwelle 300 für beide Bandlaufrichtungen. Für die Aufnahme
des Betriebes werden eine Andruckrolle und ein Magnetkopf
mit bekannten Stell- und Steuermitteln an die Tonwelle bzw.
das Magnetband einer auf die Antriebselemente des Laufwerks geschobenen Kassette heranbewegt.

Bei der gezeigten Ausführung liegen die Kassetten beispielsweise mit ihren Stirnseiten in einer durch die Kassettenanordnung gebildeten Quadratseite. Bei einer entsprechend gedrehten Laufwerkanordnung können die Kassetten
auch in umgekehrter Lage auf der Drehbühne angeordnet sein.

Durch eine von der Laufwerksteuerung oder der Kassetten-
Liftmechanik gesteuerte Vorrichtung kann dafür gesorgt
werden, daß die Drehbühne 212 gegen eine Drehung gesichert
wird, wenn sich eine Kassette in ihrer Betriebslage auf dem
Laufwerk befindet.

Ferner können sich die Fensteröffnung 238 und das Laufwerk
218 je nach Raumaufteilung eines erfindungsgemäß ausgerüsteten Kassettengerätes oder Autoradios auch an anderer Stelle,
gemäß Fig. 9 beispielsweise unterhalb einer der Kassetten 2
oder 3, befinden.

Außerdem können die als Trennwände der Kassetten-Aufnahmekammern vorhandenen Rippen der Drehbühne 212 und die Einschuböffnung 236 des Aufnahmeteiles 214 auch so ausgeführt
werden, daß die Kassetten quer anstatt parallel zu einer
längeren Kassettenseite eingeschoben werden können. Weiter
kann der bei dem gezeigten Ausführungsbeispiel rechts liegende Einschubschacht 236 bei einer abgewandelten Ausführung auch auf der linken Seite der Anordnung liegen.

Die vorliegende Erfindung ermöglicht also eine vielseitige
Anpassung an die jeweiligen räumlichen Gegebenheiten eines
damit ausgerüsteten Gerätes.

A n s p r ü c h e :

1. Kleinkassettengerät mit Autoreverse-Laufwerk mit einem
   umsteuerbaren Tonwellenantrieb für beide Bandlaufrichtungen, gekennzeichnet durch eine Wechselvorrichtung
   (14, 210) mit einer Drehbühne (18, 212) für eine Anzahl
   um eine zentrale Drehachse (20, 216) herum in einer
   gemeinsamen Ebene liegend angeordneter Kleinkassetten
   (1 bis 4), welche durch Drehung der Bühne in wählbarer
   Reihenfolge nacheinander in eine dem Laufwerk zugeordnete Betriebsposition bewegbar sind.

2. Kleinkassettengerät nach Anspruch 1, dadurch gekennzeichnet, daß die Wechselvorrichtung ein lösbar verriegelt
   in das Gerät (10, 12) einschiebbares Magazin (14) ist
   mit einem von außen antreibbaren Drehteller (18) des
   Magazins als Drehbühne für die herausnehmbar eingelegten Kassetten (1-4).

3. Kleinkassettengerät nach Anspruch 2, dadurch gekennzeichnet, daß vier Kleinkassetten (1 bis 4) nach Art von Windmühlenflügeln mit geringen Zwischenabständen derart um
   den Drehpunkt (20) des Drehtellers (18) herum angeordnet sind, daß die Flächendiagonalen diametral gegenüberliegender Kassettenpaare (1/3, 2/4) mit rechtwinklig zueinander liegenden Drehtellerdurchmessern zusammenfallen.

4. Kleinkassettengerät nach Anspruch 2 oder 3, gekennzeichnet durch im Boden des Drehtellers (18) vertiefte Aufnahmemulden zu  sicheren Lagefestlegung der Kassetten
   (1 bis 4) auf dem Drehteller des Magazins (14).

5. Kleinkassettengerät nach einem der Ansprüche 2 bis 4, dadurch gekennzeichnet, daß der Drehteller (18) im wesentlichen eine in einem den Drehteller umfassenden Gehäuserahmen (16) des Magazins (14) drehbare Kreisscheibe ist.

6. Kleinkassettengerät nach Anspruch 5, dadurch gekennzeichnet, daß der mit einem am äußeren Scheibenumfang
in Form eines zylindrischen Ringes hochgezogenen Rand
(82) ausgebildete Drehteller (18) die Form eines flachen
Topfes hat.

7. Kleinkassettengerät nach Anspruch 6, gekennzeichnet durch
radial von der zylindrischen Ringwand (82) am Außenumfang des Drehtellers (18) nach innen vorspringende
Stabilisierungsrippen (88).

8. Kleinkassettengerät nach Anspruch 6 oder 7, gekennzeichnet durch einen an der freien Oberkante des hochgezogenen Tellerrandes (82) nach außen abgewinkelten Ringflansch (84).

9. Kleinkassettengerät nach einem der Ansprüche 5 bis 8,
dadurch gekennzeichnet, daß der Drehteller in einem Gehäuserahmen (16) des Magazins um einen zentralen Drehpunkt (20) drehbar gelagert ist.

10. Kleinkassettengerät nach einem der vorhergehenden Ansprüche, gekennzeichnet durch eine mit der oberen Kante
eines den Drehteller (18) umfassenden Gehäuserahmens
(16) verbundenen Abdeckung (44) der auf dem Drehteller
angeordneten Kassetten (1 bis 4) und durch eine in der
Abdeckung (44) ausgeschnittene Zugangsöffnung (85) für
die Antriebselemente des Kassettenlaufwerkes (90) und
für das Entnehmen einzelner Kassetten.

11. Kleinkassettengerät nach Anspruch 9 und 10, gekennzeichnet durch einen mit dem Drehteller (18) verbundenen, zentralen Lagerzapfen (40) der zur Zentrierung des Drehtellers in eine zentrale Lagerbohrung (42) der Abdeckung
des Magazinrahmens (16) eintaucht.

12. Kleinkassettengerät nach einem oder mehreren der Ansprüche 5 bis 11, dadurch gekennzeichnet, daß der Drehteller
mit seinem Außenrand bzw. seinem äußeren Ringflansch (84)
radial in eine im wesentlichen ringförmig umlaufende
Führungs-Ausnehmung (85) des wenigstens durch eine Eintrittsöffnung für die äußeren Antriebsmittel (46) unterbrochenen Gehäuserahmens (16) des Magazins (14) eingreift.

13. Kleinkassettengerät nach einem oder mehreren der vorhergehenden Ansprüche, dadurch gekennzeichnet, daß die
äußeren Antriebsmittel (46) des Gerätes (10) beim Einschieben des Magazins (14) in den Magazinschacht (10)
des Gerätes bei gleichzeitiger Lösung einer Tellerverriegelung (60) selbsttätig mit dem Rand (58, 82) des
Drehtellers (18) in Antriebsverbindung treten.

14. Kleinkassettengerät nach Anspruch 13, dadurch gekennzeichnet, daß die Antriebsmittel (46) als Zahnradantrieb
ausgebildet sind.

15. Kleinkassettengerät nach Anspruch 12, dadurch gekennzeichnet, daß die Antriebsmittel (46) als Reibradantrieb ausgebildet sind.

16. Kleinkassettengerät nach einem oder mehreren der vorhergehenden Ansprüche, gekennzeichnet durch eine höhenverstellbare Greifvorrichtung mit an Schwenkarmen (110)
sitzenden Kassettengreifern (112), welche beim Absenken
der Greifvorrichtung im Bereich von gegenüberliegende
Kassettenseiten hintergreifenden Vertiefungen oder Öffnungen (114, 116) des Drehtellers (18) eine mit dem Drehteller in Betriebsposition gebrachte Einzelkassette aufnehmen und beim Anheben der Greifvorrichtung auf die Antriebselemente des Laufwerks (90) aufschieben.

17. Kleinkassettengerät nach einem oder mehreren der vorhergehenden Ansprüche, gekennzeichnet durch senkrecht vom Drehteller aufragende Verriegelungselemente (34, 36), die als Wickelsperren mit den Innenritzeln der Bandspulen in das Magazin (14) eingesetzter Kassetten in Eingriff sind.

18. Kleinkassettengerät nach einem oder mehreren der vorhergehenden Ansprüche, gekennzeichnet durch eine nach Art einer Rastklinke im Magazinrahmen (16) angeordnete, am Tellerrand (58) angreifende Drehsperre (60), die beim Ankoppeln der Antriebsmittel (46) an den Drehteller des in den Magazinschacht (12) des Gerätes eingeschobenen Magazins (14) durch Auftreffen eines Hebelarmes (68) der schwenkbaren Klinke (62) auf einen gerätefesten Anschlag (70) selbsttätig lösbar ist.

19. Kleinkassettengerät nach Anspruch 1, dadurch gekennzeichnet, daß die Wechselvorrichtung (210) in das Gerät eingebaut ist, und daß sich bei gleichmäßigen Drehschritten der Drehbühne (212) jeweils eine der Kassetten (1 bis 4) in ihrer dem Laufwerk (218) zugeordneten Betriebsposition und eine andere in einer von außen her zugänglichen Auswechselposition befindet.

20. Kleinkassettengerät nach Anspruch 19, dadurch gekennzeichnet, daß vier Kleinkassetten (1 bis 4) so auf der Drehbühne (212) liegen, daß jeweils eine lange und eine kurze Seite benachbarter Kassetten eine Seite eines Quadrates bilden, dessen Diagonalen sich im Bühnendrehpunkt (216) schneiden.

21. Kleinkassettengerät nach Anspruch 19 oder 20, dadurch gekennzeichnet, daß die Drehbühne (212) im wesentlichen eine Kreisscheibe (220) ist, deren Kassetten-Auflagefläche durch Trennwände (222, 224) in durch Einschuböffnungen am Umfang der Drehbühne zugängliche Aufnahmekammern (226) für die einzelnen Kassetten (1 bis 4) unterteilt ist.

22. Kleinkassettengerät nach Anspruch 21, dadurch gekennzeichnet, daß die einzelnen Aufnahmekammern (226) in einer rechtwinklig gekreuzten Anordnung um den Bühnendrehpunkt (216) herum angeordnet sind, so daß jeweils die dem Drehpunkt nähere seitliche Begrenzung einer Kammer die Endwand einer benachbarten Kammer bildet.

23. Kleinkassettengerät nach einem der Ansprüche 20 bis 22, dadurch gekennzeichnet, daß die am Außenrand (280) der Drehbühne (212) liegenden Stirnkanten der Trennwände (222,224) zwischen in Umfangsrichtung benachbarten Einschuböffnungen der einzelnen Aufnahmekammern (226) durch zylindrische Ringwandabschnitte (228) der Drehbühne verbunden sind.

24. Kleinkassettengerät nach einem oder mehreren der vorhergehenden Ansprüche, dadurch gekennzeichnet, daß die Drehbühne (212) in einem im Gerät feststehenden, dem Drehbühnendurchmesser entsprechenden, flachen, topfartigen Aufnahmeteil (214) gelagert ist, der eine durch eine von außen zugängliche Einschuböffnung (236) unterbrochene, zylindrische Umfangswand (234) besitzt, und daß im Boden des Gehäuseteiles ein zum Laufwerk offenes Fenster (238) vorhanden ist, über welchem sich je nach Drehstellung der Drehbühne eine der Kassettenaufnahmekammern (226) befindet.

25. Kleinkassettengerät nach einem oder mehreren der vorhergehenden Ansprüche, gekennzeichnet durch gesteuerte Antriebsmittel (250), die für eine schrittweise Drehung der Drehbühne (212) mit dieser kuppelbar sind.

26. Kleinkassettengerät nach Anspruch 25, dadurch gekennzeichnet, daß eine in beiden Richtungen antreibbare Reibrolle (256) der Antriebsmittel in Antriebseingriff mit dem kreisförmigen Umfangsrand (280) der Drehbühne (212., 220) schwenkbar ist.

27. Kleinkassettengerät nach Anspruch 26, gekennzeichnet durch eine Drehsperre (230, 240, 266) zur Verriegelung der Drehbühne (212) in denjenigen Drehstellungen, in welchen eine Kassette in ihrer Betriebsposition und eine andere in ihrer Auswechselposition ist.

28. Kleinkassettengerät nach Anspruch 27, dadurch gekennzeichnet, daß die Drehsperre einen radial durch eine Öffnung (240) der Umfangswand (234) des Aufnahmeteiles (214) je nach Drehstellung der Drehbühne (212) in jeweils eine fluchtende Durchgangsöffnung (230) eines der Ringwandabschnitte (228) der Drehbühne (212) eintauchenden Stift (266) aufweist.

29. Kleinkassettengerät nach einem der Ansprüche 25 bis 28, dadurch gekennzeichnet, daß die Antriebsmittel (250, 256) der Drehbühne (212) gleichzeitig Bestandteil einer bei arretierter Drehbühne wirksamen Kassetten-Ein-Ausschubautomatik sind.

30. Kleinkassettengerät nach Anspruch 29, dadurch gekennzeichnet, daß die in entgegengesetzte Richtungen antreibbare Reibrolle (256) des Antriebes im Bereich der Einschuböffnung (236) der Wechselvorrichtung (210) an eine Seitenfläche einer Kassette anschwenkbar ist.

31. Kleinkassettengerät nach Anspruch 30, dadurch gekennzeichnet, daß auf der Drehbühne (212) frei drehbar gelagerte, durch eine Öffnung im Bereich des Eintrittsendes in der drehpunktnäheren Seitenwand (222) jeder Aufnahmekammer (226) etwas vorspringende Rollen (57) angeordnet sind, welche beim Ein- bzw. Ausschub einer Kassette (1 bis 4) mit deren der Andruckrolle (256) gegenüberliegenden Seitenwand in Berührung ist.

0060396

**Fig. 1**

**Fig. 2**

**Fig. 3**

0060396

Fig. 4

44  88

18  82  16

Fig. 5

10

2

3

86

4

1

18  88  82  16

0060396

Fig. 6

Fig. 7

**Fig. 8**

210

226

218

**Fig. 9**

210

226-2
257-2
228-3
230-3
224-3
212
226-3
224-2
230-2
228-2
222-2
244
242
216
222-3
214
257-3
228-4
224-4
222-1
257-1
226-1
290
282
284
1
222-4
230-4
266
278
262
258
260
264
274
292
286
288
4
250
256
224-1
230-1
257-4
228-1
226-4
236
272
280
270
256'
276

## Fig. 10